# EUROPEAN PATENT SPECIFICATION

(11) **EP 3 974 745 B1**
(45) Date of publication and mention of the grant of the patent: **23.04.2025**
(21) Application number: 21197080.1
(22) Date of filing: 16.09.2021
(51) Int. Cl.: F25B 1/10, F25B 13/00, F25B 41/42, F25B 49/02, F25B 41/20, F25B 41/30, F25B 41/26, F24F 1/0035, F24F 1/0083

(54) **MULTI-AIR CONDITIONER FOR HEATING, COOLING AND VENTILATION**
MEHRFACHKLIMAANLAGE ZUM HEIZEN, KÜHLEN UND LÜFTEN
MULTICLIMATISEUR POUR LE CHAUFFAGE, LE REFROIDISSEMENT ET LA VENTILATION

(30) Priority: 23.09.2020 KR 20200123155
(43) Date of publication of application: 30.03.2022
(73) Proprietor: LG Electronics Inc., SEOUL 07336 (KR)
(72) Inventor: PARK, Junseong, 08592 Seoul (KR); KIM, Daehyoung, 08592 Seoul (KR); KIM, Hyungjoon, 08592 Seoul (KR); SA, Yongcheol, 08592 Seoul (KR)
(74) Representative: Vossius & Partner Patentanwälte Rechtsanwälte mbB

(56) References cited:
- WO-A1-2013/175725
- JP-A- 2005 098 607
- JP-A- 2006 336 971

## Description

### BACKGROUND OF THE DISCLOSURE

### Field of the disclosure

The present invention relates to a multi-air conditioner for heating, cooling, and ventilation, and more particularly, to a multi-air conditioner for heating, cooling, and ventilation which allows for simultaneous operation of cooling, heating, and ventilation by means of a single outdoor unit.

### Related Art

Generally, a multi-air conditioner is a type of air conditioner that has a number of indoor units connected to a single outdoor unit. The multi-air conditioner uses the outdoor unit for common use and uses each of the indoor units as a cooler or a heater.

The recent trend is that the indoor units are connected in parallel to effectively cope with cooling or heating load depending on how many indoor units are operated.

A multi-air conditioner according to the conventional art includes a plurality of outdoor units, a plurality of indoor units, and refrigerant piping connecting the outdoor units and the indoor units. The outdoor units include a main outdoor unit and a plurality of sub outdoor units.

Each of the outdoor units has a compressor for compressing a gaseous refrigerant of low temperature and low pressure into a high-temperature, high-pressure refrigerant, an outdoor heat exchanger for transferring heat between a circulating refrigerant and outdoor air, and a four-way valve for switching the flow of refrigerant depending on cooling or heating operation. Each of the indoor units has an expansion mechanism and an indoor heat exchanger for transferring heat between a circulating refrigerant and indoor air.

When the multi-air conditioner according to the conventional art thus constructed is in cooling operation, a refrigerant compressed in the compressors of the main outdoor unit and sub outdoor units is sent to the outdoor heat exchangers by the four-way valves, and a refrigerant passing through the outdoor heat exchangers is condensed through heat exchange with the surrounding air and then sent to the expansion mechanisms. The refrigerant expanded in the expansion mechanisms enters the indoor heat exchangers and evaporates as it absorbs heat from the indoor air, thereby cooling a room.

Meanwhile, in heating operation, the direction of flow is switched by the four-way valves, and a refrigerant discharged from the compressors sequentially passes through the four-way valves, the indoor heat exchangers, outdoor electronic expansion valves (LEV: linear expansion valves), and the outdoor heat exchangers, thereby heating the room.

Meanwhile, dedicated outdoor air systems (DOAS) are widely used.

The dedicated outdoor air systems operate in such a way as to enhance user comfort and indoor air quality by taking in fresh air from outside and lowering the humidity of indoor air.

By employing such a dedicated outdoor air system, outdoor air coming into a room and indoor air are kept in proper condition. Thus, the operation of an air conditioner for cooling and heating can bring benefits such as saving energy and reducing cooling and heating loads and enhancing user satisfaction.

By employing such a dedicated outdoor air system, a separate outdoor unit for the dedicated outdoor air system and another separate outdoor unit for the air conditioner for cooling and heating are required, which leads to increased facility costs and complexity in piping.

As a conventional technology for overcoming this issue, Korean Laid-Open Patent No. 2015-0082592A discloses an energy-saving dedicated outdoor air conditioner using a heat pipe for dehumidification and an air conditioning system combined with a chilled beam.

That is, this patent discloses a system that maximizes dehumidification performance by precooling and reheating outdoor air coming from outside without additional energy consumption. However, this conventional technology has limited applicability due to installation limitations and also has difficulties in air conditioner control.

### [Prior Art Document]

### [Patent Document]

2015-0082592 (Published on June 8, 2016). JP 2006 336971 A discloses a ventilation air-conditioning system in which a first compression cycle and a second compression cycle are connected and disconnected by means of a shut-off valve located in the refrigerant line parallel to an indoor heat exchanger. When the valve is open the two compressors are connected in series and the indoor heat exchangers have a parallel configuration with respect to the refrigerant flow. When the valve is closed both the second compressor and the second indoor heat exchanger are disconnected.

### SUMMARY

A multi-air conditioner for cooling and heating according to the present invention is defined in claim 1. A first aspect of the present invention is to provide a multi-air conditioner that allows for simultaneous operation of an air conditioner for cooling and heating and a dedicated outdoor air conditioner by using a single outdoor unit.

A second aspect of the present invention is to provide a multi-air conditioner that uses intermediate pressure by adopting two-stage serial compression so as to control the handling of sensible and latent heats by a single outdoor unit when a single multi-air conditioner is employed.

A third aspect of the present invention is to provide an air conditioner that provides cooling, heating, and dehumidification simultaneously by employing a multi-air conditioner and therefore improves heat efficiency by providing cooling and heating using air from which latent heat is removed.

An exemplary embodiment of the present invention provides a multi-air conditioner for cooling and heating which is intended to remove latent heat and sensible heat by using a single outdoor unit, the multi-air conditioner including: at least one indoor unit installed in a room, that comprises an indoor heat exchanger and an indoor expansion valve; an outdoor unit connected to the indoor unit via a refrigerant pipeline, that comprises an outdoor heat exchanger, a plurality of compressors, an outdoor expansion valve, and a four-way valve; and a dedicated outdoor air ventilation unit connected to the indoor unit and the outdoor unit via the refrigerant pipeline, that dehumidifies and ventilates outdoor air and supplies the outdoor air to the room, wherein the outdoor unit provides a refrigerant to both the dedicated outdoor air ventilation unit and the indoor unit by controlling the compressors depending on an operation mode of the dedicated outdoor air ventilation unit and the indoor unit.

The outdoor unit includes:
a first compressor; a second compressor connectable in series or parallel to the first compressor; and a compressor valve connected between the first compressor and the second compressor, that connects or disconnects the first compressor and the second compressor.

The compressor valve may connect or disconnect an outlet side of the first compressor and an inlet side of the second compressor.

When the compressor valve is in On mode, the compression ratio of the compressors in the outdoor unit may go up.

The refrigerant pipeline may include: a liquid pipe connecting pipeline through which a high-pressure liquid refrigerant flows; a first gas pipe connecting pipeline through which a high-pressure gaseous refrigerant flows; and a second gas pipe connecting pipeline through which a low-pressure gaseous refrigerant flows.

The second gas pipe connecting pipeline may be connected to the inlet side of the second compressor.

The refrigerant pipeline may further include a common pipe that causes a refrigerant to flow from the dedicated outdoor air ventilation system to an inlet side of the first compressor.

The liquid pipe connecting pipeline may further include a ventilation liquid pipe line branched off to the dedicated outdoor air ventilation unit to allow a liquid refrigerant to flow to the dedicated outdoor air ventilation unit.

In a cooling operation of the indoor unit, a gaseous refrigerant may be provided from the indoor unit to the second compressor via the second gas pipe connecting pipeline, and the gaseous refrigerant may be provided from the dedicated outdoor air ventilation unit to the first compressor via the common pipe.

The pressure of the gaseous refrigerant provided to the first compressor may be higher than the pressure of the gaseous refrigerant provided to the second compressor.

In a heating operation of the indoor unit, a liquid refrigerant may be provided from the indoor unit to the dedicated outdoor air ventilation unit via the ventilation liquid pipe line.

In the heating operation of the indoor unit, the first and second compressors may compress the gaseous refrigerant from the dedicated outdoor air ventilation unit and provide the same to the indoor unit via the first gas pipe connecting pipeline.

In the heating operation of the indoor unit, the first compressor and the second compressor may be connected in series to compress the gaseous refrigerant from the dedicated outdoor air ventilation unit and provide the same to the indoor unit via the first gas pipe connecting pipeline.

The compression ratio of the first compressor and the second compressor may vary with indoor humidity.

The multi-air conditioner for cooling and heating may further include a distributor for distributing a refrigerant to the plurality of indoor units, wherein the distributor includes: a low-pressure valve that allows a low-pressure gaseous refrigerant to flow to a gas pipeline connected to the indoor unit; and a high-pressure valve that allows a high-pressure gaseous refrigerant to flow to a gas pipeline connected to the indoor unit.

The multi-air conditioner for cooling and heating may include: a first accumulator connected to the inlet side of the first compressor, that collects the gaseous refrigerant and provides the same to the first compressor; and a second accumulator connected to the inlet side of the second compressor, that collects the gaseous refrigerant and provides the same to the first compressor.

In the heating operation mode, no refrigerant may flow to the second gas pipe connecting pipeline.

Through the above solution, it is possible to run an air conditioner for cooling and heating and a dedicated outdoor air conditioner simultaneously by using a single outdoor unit. Moreover, the handling of sensible and latent heats can be controlled by a single outdoor unit, thereby minimizing facility costs and enhancing control reliability.

Furthermore, it is possible to provide cooling, heating, and dehumidification simultaneously by employing a multi-air conditioner and therefore improve heat efficiency by providing cooling and heating using air from which latent heat is removed.

### BRIEF DESCRIPTION OF THE DRAWINGS

FIG. 1 is a schematic view of a configuration of a multi-air conditioner for cooling, heating, and ventilation according to an embodiment of the present invention**.**
FIG. 2 is an overall configuration diagram for mode operations of the multi-air conditioner for cooling, heating, and ventilation of FIG. 1.
FIG. 3 is an operation diagram showing how the multi-air conditioner for cooling, heating, and ventilation of FIG. 1 works in general cooling operation.
FIG. 4 is an operation diagram showing how the multi-air conditioner for cooling, heating, and ventilation of FIG. 1 works in heating and ventilation operation.
FIG. 5 is an operation diagram showing how the multi-air conditioner for cooling, heating, and ventilation of FIG. 1 works in general heating operation.
FIG. 6 is a graph showing an enthalpy change caused by an increase in compression ratio according to the present invention**.**
FIG. 7 is an operation diagram showing how the multi-air conditioner for cooling, heating, and ventilation of FIG. 1 works during simultaneous operation of cooling, heating, and ventilation according to another embodiment of the present invention.

### DESCRIPTION OF EXEMPLARY EMBODIMENTS

Advantages and features of the present invention and a method of achieving the same will be clearly understood from embodiments described below in detail with reference to the accompanying drawings. However, the present invention is not limited to the following embodiments and may be implemented in various different forms. The embodiments are provided merely for complete disclosure of the present invention. The present invention is defined only by the scope of the claims. Like reference numerals refer to like elements throughout the specification.

Spatially relative terms, such as "below," "beneath," "lower," "above," "upper" and the like, may be used herein for ease of description to describe one element's relationship to other elements as illustrated in the figures. It will be understood that the spatially relative terms are intended to encompass different orientations of the element in use or operation in addition to the orientation depicted in the figures. For example, if the element in the figures is turned over, elements described as "below" or "beneath" other elements would then be oriented "above" the other elements. Thus, the exemplary term "below" can encompass both an orientation of above and below. The element may be otherwise oriented, and the spatially relative descriptors used herein may be interpreted accordingly.

The terminology used herein is for the purpose of describing particular embodiments only and is not intended to be limiting of the invention. As used herein, the singular forms are intended to include the plural forms as well, unless the context clearly indicates otherwise. The term "comprise" and/or "comprising" used herein specify the existence of stated components, steps, and/operations, but do not preclude the existence or addition of one or more components, steps, and/or operations thereof.

Unless otherwise defined, all terms (including technical and scientific terms) used herein have the same meanings as those commonly understood by one of ordinary skill in the art. It will be further understood that terms such as those defined in commonly used dictionaries should be interpreted as having meanings consistent with their meanings in the context of the relevant art and the present disclosure, and are not to be interpreted in an idealized or overly formal sense unless expressly so defined herein.

In the drawings, the thickness or size of each element may be exaggerated, omitted, or schematically illustrated for convenience of description and clarity. Also, the size or area of each element may not entirely reflect the actual size thereof.

Hereinafter, an exemplary embodiment of the present disclosure will be described below with reference to the accompanying drawings.

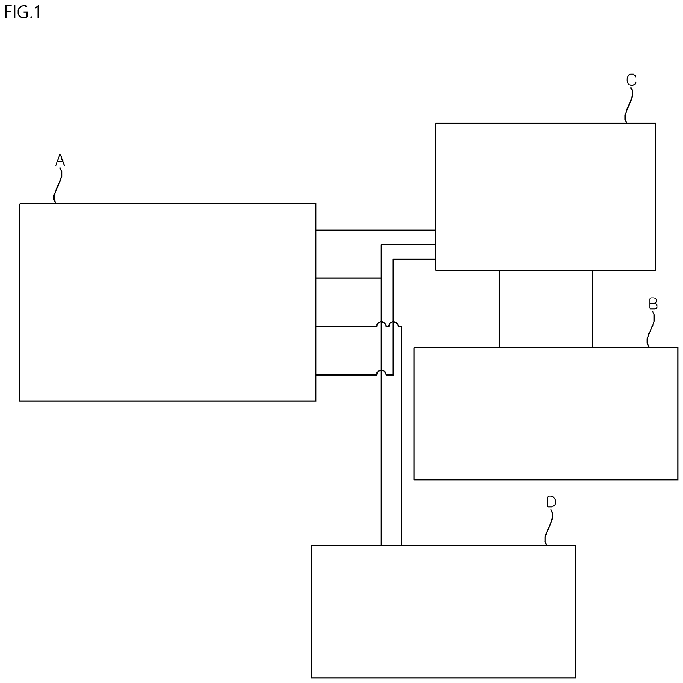

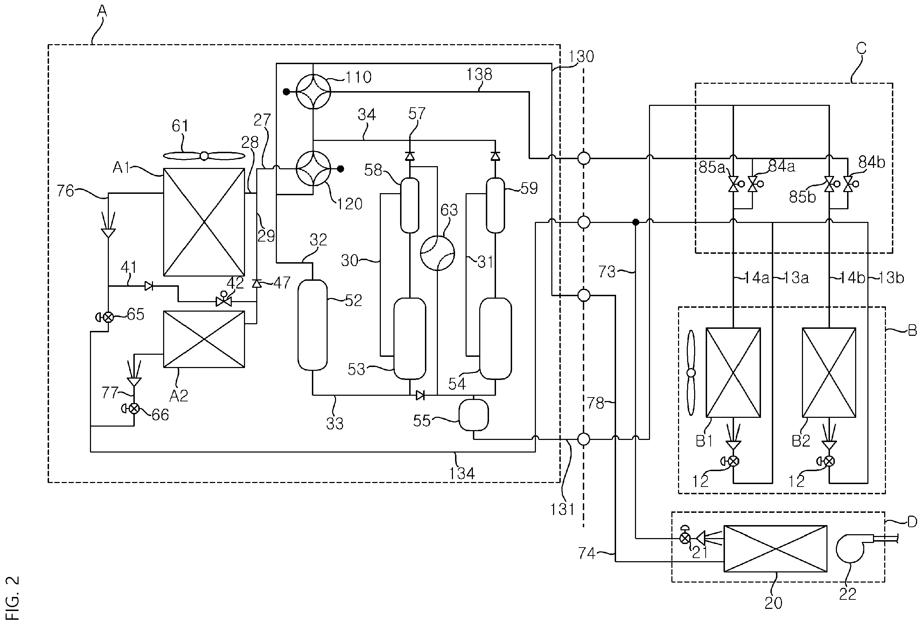

FIG. 1 is a schematic view of a configuration of a multi-air conditioner for cooling, heating, and ventilation according to an embodiment of the present invention**.** FIG. 2 is an overall configuration diagram for mode operations of the multi-air conditioner for cooling, heating, and ventilation of FIG. 1.

Referring to FIGS. 1 and 2, a multi-air conditioner 100 for cooling, heating, and ventilation according to an embodiment of the present invention is depicted. The multi-air conditioner 100 for cooling, heating, and ventilation includes a plurality of indoor units B1, B2,... for cooling, heating, and ventilation, at least one outdoor unit A for cooling, heating, and ventilation, a distributor C, and a dedicated outdoor air ventilation system D.

The outdoor unit A for cooling, heating, and ventilation works in conjunction with the indoor units B1, B2, ... for cooling, heating, and ventilation to cool or heat indoor air, and also works in conjunction with the dedicated outdoor air ventilation system D to provide ventilation and dehumidification to a room by removing moisture from outdoor air.

That is, the single outdoor unit A is used to dehumidify and ventilate outdoor air and supply it to the indoor units B1, B2,..., and the dehumidified and ventilated air supplied to the room is used to heat and cool indoor air.

Accordingly, the outdoor air from which latent heat is removed by the single outdoor unit A is provided to a room 200 and 210, and heating or cooling is performed through an exchange of heat with refrigerant, thereby removing sensible heat.

More specifically, the outdoor unit A for cooling and heating may include an outdoor unit casing (not shown), a compressor 53 and 54 disposed within the outdoor unit casing, an outdoor heat exchanger A1 and A2, an accumulator 52, a four-way valve 110 and 120, an oil separator 58 and 59, an outdoor expansion valve 65 and 66, and a supercooling unit (not shown).

The outdoor unit casing includes a first gas pipe valve to which a first gas pipe connecting pipeline 138 is connected, a second gas pipe valve to which a second gas pipe connecting pipeline 131 is connected, and a liquid pipe valve to which a liquid pipe connecting pipeline 134 is connected. Moreover, a common pipe 130 for connecting to a plurality of outdoor units or for performing simultaneous operation by a plurality of indoor units B1 and B2 may be further connected to the outdoor unit casing according to this embodiment, and a common pipe valve connected to the common pipe 130 is further included. The liquid pipe valve, the common pipe valve, and the first and second gas pipe valves are connected to an indoor unit B via a distributor C, and are also connected to the dedicated outdoor air ventilation system D, thereby causing the refrigerant in the outdoor unit A to circulate.

The compressor 53 and 54 may be an inverter compressor which is capable of controlling the amount of refrigerant and the discharge pressure of refrigerant by regulating operation frequency. A compressor according to this embodiment may be divided into a first compressor 53 and a second compressor 54. The first compressor 53 and the second compressor 54 may be disposed in parallel. Although this embodiment describes two compressors 53 and 54 as shown in FIG. 2, this is merely an example and the number of compressors 53 and 54 may vary.

Moreover, each compressor 53 and 54 may vary in capacity.

One of the compressors 53 and 54 may be an inverter compressor whose number of rotations varies, and the other compressor may be a constant-speed compressor.

A bypass unit may be connected to each compressor 53 and 54 to get excess oil out of the compressor 53 and 54 if there is an excessive amount of oil stored in the compressor 53 and 54.

The bypass unit may be connected to each of the compressors 53 and 54 at a position higher than or equivalent to a minimum required oil level. Depending on the oil level within the compressor 53 and 54, only the refrigerant or only the oil may be released, or both the refrigerant and the oil may be released.

The oil separator 58 and 59 is disposed on a discharge side of the compressor 53 and 54. The oil separator 58 and 59 according to this embodiment may be divided into a first oil separator 58 disposed on the discharge side of the first compressor 53 and a second oil separator 59 disposed on the discharge side of the second compressor 54. The refrigerant discharged from the compressor 53 and 54 flows to the four-way valve 110 and 120 via the oil separator 58 and 59.

The oil separator 58 and 59 collects oil contained in the discharged refrigerant and provides it back to the compressor 53 and 54.

The oil separator 58 and 59 further includes an oil collecting pipe 30 and 31 for guiding oil to the compressor 53 and 54 and a check valve disposed on the oil collecting pipe 30 and 31, for causing the refrigerant to flow in one direction.

The oil separator 58 and 59 is installed in a compressor discharge pipeline 34.

An oil collecting structure for collecting oil in the compressor 53 and 54 may be disposed on the first accumulator 52 as well. An oil collecting pipeline may be provided to connect a lower side of the first accumulator 52 and an accumulator discharge pipeline 33, and an oil return valve may be disposed on the oil collecting pipeline to control the flow of oil.

Further, a compressor valve 63 for connecting the first compressor 53 and the second compressor 54 in series or disconnecting them may be formed within the outdoor unit A according to the embodiment of the present disclosure.

The compressor valve 63 is disposed in such a way as to connect the discharge side of the first compressor 53 and an inlet side of the second compressor 54, and two stages are connected or disconnected to control compression capacity.

In this case, a second accumulator 55 is disposed on the inlet side of the second compressor 54 connected to the compressor valve 63.

The second accumulator 55 collects a gaseous refrigerant of an intermediate pressure level between the first compressor 53 and the second compressor 54 and causes it to flow to the second gas pipe connecting pipeline 131.

Accordingly, when the compressor valve 63 is turned on and operates to connect the first compressor 53 and the second compressor 54 in series, the pressure of the gaseous refrigerant in the second accumulator 55 is set to the discharge pressure of the first compressor 53. Thus, the pressure may be regulated in two stages in which the discharge pressure of the second compressor 54 is lower than the discharge pressure of the first compressor 53.

Meanwhile, in this embodiment, the outdoor heat exchanger A1 and A2 is comprised of a first outdoor heat exchanger A1 and a second outdoor heat exchanger A2. An outdoor blower fan 61 is provided to improve the heat transfer of the outdoor heat exchanger A1 and A2.

An outdoor heat exchanger-first four-way valve connecting pipeline 27 is connected to the outdoor heat exchanger A1 and A2 to cause the refrigerant to flow between the outdoor heat exchanger A1 and A2 and the first four-way valve 110. The outdoor heat exchanger-first four-way valve connecting pipeline 27 includes a first outdoor heat exchanger-first four-way valve connecting pipeline 28 connecting the first outdoor heat exchanger A1 and the first four-way valve 110, and a second outdoor heat exchanger-first four-way valve connecting pipeline 29 connecting the second outdoor heat exchanger A2 and the first four-way valve 110. The outdoor heat exchanger-first four-way valve connecting pipeline 27 connected from the first four-way valve 110 is branched off into the first outdoor heat exchanger-first four-way valve connecting pipeline 28 and the second outdoor heat exchanger-first four-way valve connecting pipeline 29.

A check valve 47 is disposed on the second outdoor heat exchanger-first four-way valve connecting pipeline 29, and the check valve 47 keeps the refrigerant supplied from the first outdoor heat exchanger-first four-way valve connecting pipeline 28 from entering the second outdoor heat exchanger-first four-way valve connecting pipeline 29.

Further, a variable path pipeline 41 may be provided to connect the first outdoor heat exchanger pipeline 76 and the second outdoor heat exchanger-first four-way valve connecting pipeline 29, and a variable path valve 42 may be disposed on the variable path pipeline 41.

The variable path valve 42 may be selectively operated. When the variable path valve 62 opens, the refrigerant flowing along the first outdoor heat exchanger pipeline 76 may pass through the variable path pipeline 41 and the variable path valve 42 and be guided to the first four-way valve 110.

In heating operation, when the variable path valve 42 closes, the refrigerant supplied through the first outdoor heat exchanger pipeline 76 flows to the first outdoor heat exchanger A1.

In cooling operation, when the variable path valve 42 closes, the refrigerant passed through the first outdoor heat exchanger A1 flows to the liquid pipe connecting pipeline 134 through the first outdoor heat exchanger pipeline 76.

In heating operation, the outdoor expansion valve 65 and 66 expands the refrigerant flowing to the outdoor heat exchanger A1 and A2. In cooling operation, the outdoor expansion valve 65 and 66 allows the refrigerant to pass through them without expanding it.

As the outdoor expansion valve 65 and 66, an electronic expansion valve EEV capable of regulating opening degree in response to an input signal may be used.

The outdoor expansion valve 65 and 66 includes a first outdoor expansion valve 65 for expanding the refrigerant flowing to the first outdoor heat exchanger A1 and a second outdoor expansion valve 66 for expanding the refrigerant flowing to the second outdoor heat exchanger A2.

The first outdoor expansion valve 65 and the second outdoor expansion valve 66 are connected to the liquid pipe connecting pipeline 134. In heating operation, the refrigerant condensed in the indoor unit B is supplied to the first outdoor expansion valve 65 and the second outdoor expansion valve 66.

The liquid pipe connecting pipeline 134 is branched and connected to the first outdoor expansion valve 65 and the second outdoor expansion valve 66, in order to be connected to the first outdoor expansion valve 65 and the second outdoor expansion valve 66. The first outdoor expansion valve 65 and the second outdoor expansion valve 66 are disposed in parallel.

A pipeline connecting the first outdoor expansion valve 65 and the first outdoor heat exchanger A1 is defined as a first outdoor heat exchanger pipeline 76. A pipeline connecting the second outdoor expansion valve 66 and the second outdoor heat exchanger A2 is defined as a second outdoor heat exchanger pipeline 77.

The first accumulator 52 holds and stores a refrigerant and provides the refrigerant to the compressor 53 and 54. The first accumulator 52 is disposed on the inlet side of the compressor 53 and 54 and connected to the four-way valve 110 and 120.

The second accumulator 55 is connected to the second compressor 54 and collects a gaseous refrigerant form the second gas pipe connecting pipeline 131 and provides it to the second compressor 54.

The outdoor unit A according to this embodiment may further include a receiver. The receiver may store a liquid refrigerant in order to regulate the amount of refrigerant circulation. The receiver stores a liquid refrigerant, apart from the liquid refrigerant stored in the first accumulator 52 and second accumulator 55.

The receiver supplies a refrigerant to the first accumulator 52 and the second accumulator 55 if the amount of refrigerant circulation is not sufficient, and collects and stores the refrigerant if the amount of refrigerant circulation is large.

The four-way valve 110 and 120 is provided on an outlet side of the compressor 53 and 54, and switches the direction of refrigerant flowing in the outdoor unit A. The four-way valve 110 and 120 properly switches the direction of refrigerant discharged from the compressor 53 and 54 depending on the cooling or heating operation of the air conditioner 100.

The four-way valves 110 and 120 according to this embodiment may be divided into a first four-way valve 110 that sends the refrigerant discharged from the compressor 53 and 54 to the outdoor heat exchanger A1 and A2 or sends the refrigerant flowing in the outdoor heat exchanger A1 and A2 to the compressor 53 and 54 via the first accumulator 52, and a second four-way valve 120 that sends the refrigerant discharged from the compressor 53 and 54 to the first gas pipe connecting pipeline 138 or sends the refrigerant introduced from the first gas pipe connecting pipeline 138 to the compressor 53 and 54 via the first accumulator 52.

Moreover, in heating operation, the first four-way valve 110 on the side of the outdoor unit A performing heating operation sends the refrigerant introduced into the outdoor heat exchanger A1 and A2 to the compressor 53 and 54 and the first gas pipe connecting pipeline 138.

The first four-way valve 110 and second four-way valve 120 according to this embodiment are set in such a way that the refrigerant discharged from the compressor 53 and 54 passes through the four-way valves 110 and 120 in Off mode, and that the refrigerant discharged from the compressor 53 and 54 does not pass through the four-way valves 110 and 120 in On mode.

In the cooling operation of the air conditioner 100 according to this embodiment, the first four-way valve 110 is maintained in On mode, and the second four-way valve 120 is maintained in Off mode. In the heating operation of the air conditioner 100 according to this embodiment, the first four-way valve 110 is maintained in Off mode, and the second four-way valve 120 is maintained in On mode.

The air conditioner 100 according to this embodiment may include a hot gas unit (not shown) through which part of the refrigerant compressed in the compressor 53 and 54 flows. Part of the high-temperature, high-pressure refrigerant compressed in the compressor 53 and 54 may pass through a hot gas bypass pipeline and enter the outdoor heat exchanger A1 and A2.

The hot gas unit may include the hot gas bypass pipeline for bypassing a refrigerant and a hot gas valve.

A supercooling unit (not shown) may be disposed on the liquid pipe connecting pipeline 134.

The supercooling unit may include a supercooling heat exchanger, and may allow the refrigerant in the first accumulator 52 to mix with the supercooled refrigerant passed through the supercooling heat exchanger and flow to the liquid pipe connecting pipeline 134.

The air conditioner 100 according to this embodiment may further include a pressure sensor for measuring the pressure of a refrigerant, a temperature sensor for measuring the temperature of the refrigerant, and a straightener for removing impurities present in the refrigerant flowing through the refrigerant pipe.

The air conditioner 100 according to this embodiment includes a refrigerant pipeline 134, 131, and 138 connecting the outdoor unit A, the indoor unit B, and the dedicated outdoor air ventilation system D, through which a refrigerant flows, and a common pipe 130 connecting a plurality of outdoor units A, a plurality of indoor units B, and the dedicated outdoor air ventilation system D.

The refrigerant pipeline 131, 134, and 138 may be divided into a liquid pipe connecting pipeline 134 through which a liquid refrigerant flows and gas pipe connecting pipelines 131 and 138 through which a gaseous refrigerant flows.

The liquid pipe connecting pipeline 134 and the first and second gas pipe connecting pipelines 138 and 131 extend within the outdoor unit A, and the common pipe 130 also extends within it.

The common pipe 130 is a low-pressure connecting pipeline which is connected to the dedicated outdoor air ventilation system D.

At least one indoor unit B is installed in the room 200. For convenience of explanation, FIG. 2 illustrates that two indoor units B1 and B2 are installed, but the present disclosure is not limited thereto.

One indoor unit is designated as a first indoor unit B1 and the other one is designated as a second indoor unit B2, and a description will be made with respect to the first indoor unit B1 since each indoor unit B1 and B2 has identical components.

The indoor units B1 and B2 are installed in respective rooms 210 and 220 separate from each other, and each of them includes an indoor expansion valve 12 and an indoor heat exchanger B1 and B2 (denoted by the same reference numeral as the indoor unit), within an indoor casing (not shown).

In each indoor unit B1 and B2, the indoor expansion valve 12 and the indoor heat exchanger B1 and B2 may be connected to the refrigerant pipeline 13 and 14, and the indoor unit B1 and B2 may be connected in parallel to the refrigerant pipeline 13 and 14. Each indoor unit B1 and B2 may be installed in such a way as to draw air from the room 210 and 220 intended to be air-conditioned, exchange heat with the indoor heat exchanger B1 and B2, and then discharge the air to the room intended to be air-conditioned. An indoor fan (not shown) may be installed in the indoor unit B to blow indoor air to the indoor heat exchanger B.

As indoor refrigerant pipelines connected to the indoor unit B, an indoor liquid pipe 13 connected to the liquid pipe connecting pipeline 134 and an indoor gas pipe 14 connected to the gas pipe connecting pipeline 138 may be installed in the room 200 where at least one indoor unit B is installed. The indoor expansion valve 12 is formed in the indoor liquid pipeline 13 so as to cause a refrigerant to flow to the indoor heat exchanger B1 and B2.

In this case, each indoor unit B1 and B2 may further include a controller (not shown) that receives a control command and a sensing signal from outside and transmits them to the outdoor unit A via wired/wireless communication.

Meanwhile, in the case of a simultaneous-type air conditioner, a distributor C is provided between the indoor units B and the outdoor unit A.

The distributor C is disposed between an outdoor unit A for cooling and heating and at least one indoor units B1 and B2 for cooling and heating, and distributes a refrigerant to the indoor units B1 and B2 for cooling and heating in accordance with cooling or heating operation conditions.

The distributor C includes a high-pressure gas header, a low-pressure gas header, a liquid header, and a control valve 84 and 85.

The indoor electronic expansion valves 12 of the indoor unit B are installed on indoor connecting pipelines 13a and 13b connecting the indoor heat exchangers B1 and B2 for cooling and heating and the liquid header.

The high-pressure gas header is connected to the first gas pipe connecting pipeline 138 and one side of the indoor units B1 and B2 for cooling and heating. The low-pressure gas header is connected to the second gas pipe connecting pipeline 131 and the other side of the indoor units B1 and B2 for cooling and heating. The liquid header is connected to the liquid pipe connecting pipeline 134 and one side of the indoor units B1 and B2 for cooling and heating. Further, the high-pressure header, the low-pressure header, and the liquid header may be connected to respective pipelines of another outdoor unit (not shown). Low-pressure valves 85a and 85b are formed on indoor gas pipes 14a and 14b so as to be connected to the low-pressure gas header, and high-pressure valves 84a and 84b are formed on the indoor gas pipes 14a and 14b so as to be connected to the indoor gas pipes 14a and 14b.

A bypass pipe (not shown) may be installed between the low-pressure valves 85a and 85b and the high-pressure valves 84a and 84b.

Meanwhile, the air conditioner 100 according to the embodiment of the present disclosure further includes a dedicated outdoor air ventilation system D for receiving a refrigerant from the common pipe 130, removing latent heat from outdoor air, and supplying the outdoor air to the room.

The dedicated outdoor air ventilation system D may be installed in the room 200.

The dedicated outdoor air ventilation system D may have an outdoor air duct connector and an air supply fan in a casing (not shown), with a dehumidification unit mounted inside.

According to this embodiment of the present disclosure, an expansion valve 21 and a heat exchanger 20 may be connected to the liquid pipe connecting pipeline 134, and the dehumidification unit may be installed in such a way as to draw outdoor air into a room intended to be ventilated, exchange heat with the heat exchanger 20, and discharge the outdoor air to the room intended to be ventilated.

To this end, a ventilation liquid pipe line 73 branched from the liquid pipe connecting pipeline 134 and connected to the dedicated outdoor air ventilation system D and a ventilation gas pipe line 74 connected to the common pipe 130 are installed, and an indoor expansion valve 21 is formed in the ventilation liquid pipe line 73, by which a refrigerant flows to the heat exchanger, absorbs heat from outdoor air and changes to a gaseous state, and is then admitted into the common pipe 130 via the ventilation gas pipe line 74. In this case, the supplied outdoor air may be supplied to the room 200 and 210 after dehumidified by removing latent heat.

Moreover, the dedicated outdoor air ventilation system D may further include at least one filter unit (not shown) for filtering out impurities from outdoor air that has passed through the heat exchanger 20.

A pressure chamber 22 with a water supply hole may be formed so as to supply a dehumidified air stream from the dedicated outdoor air ventilation system D to the room, and a chamber with a nozzle may be formed on one side and the other side of the pressure chamber 22 so that the dehumidified air stream is pushed out toward the room.

As such, at least one indoor unit B1 and B2 and the dedicated outdoor air ventilation system D connected by a single outdoor unit A may simultaneously supply outdoor air to the room by removing latent heat through refrigerant circulation, thereby cooling or heating the supplied indoor air.

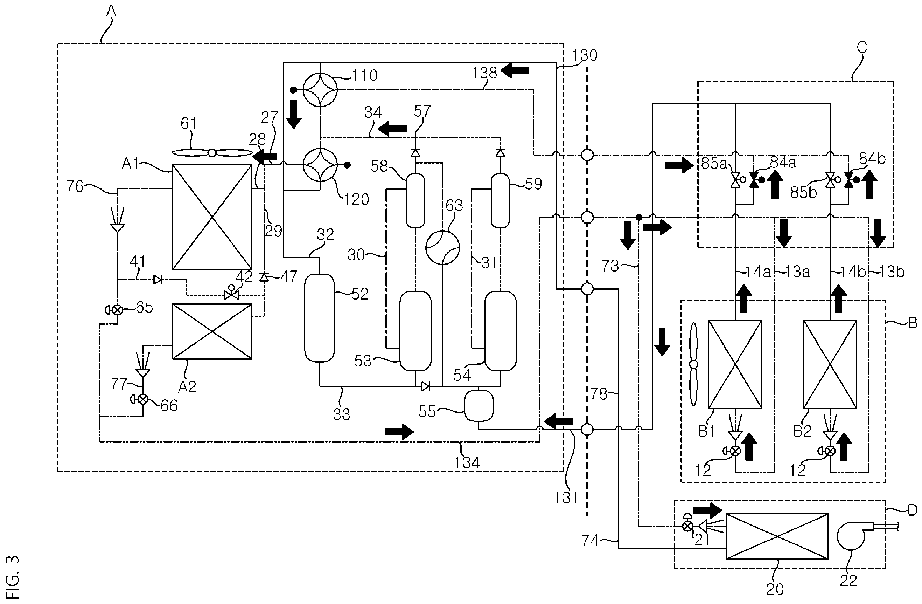

Hereinafter, the flow and control of refrigerant in different operation modes according to the embodiment of the present disclosure will be described with reference to FIGS. 3 to 5.

FIG. 3 is an operation diagram showing how the multi-air conditioner for cooling, heating, and ventilation of FIG. 1 works in general cooling operation.

As shown in FIG. 3, when all of the indoor units B are in cooling mode, a high-temperature, high-pressure refrigerant compressed by the compressor 53 and 54 is further condensed as it flows through the outdoor heat exchangers A1 and A2.

The first four-way valve 110 is set to On mode in which the refrigerant discharged from the compressor 53 and 54 does not pass through the first four-way valve 110. The second four-way valve 120 is set to Off mode in which the refrigerant discharged from the compressor 53 and 54 passes through the second four-way valve 120. That is, the second four-way valve 120 connects the compressor discharge pipeline 34 and the outdoor heat exchanger-first four-way valve connecting pipeline 27.

Meanwhile, an accumulator intake pipeline 32 is branched off to the common pipe 130, and part of the refrigerant flows to the accumulator intake pipeline 32 via the common pipe 130.

In cooling mode, the liquid pipe valve, the gas pipe valve, and the common pipe valve open as well.

Moreover, the compressor valve 63 operates in Off mode so that the outlet side of the first compressor 53 and the inlet side of the second compressor 54 are connected not in series but in parallel.

As for the flow of refrigerant, the refrigerant discharged from the compressor 53 and 54 flows to the outdoor heat exchanger A1 and A2 via the second four-way valve 120. The refrigerant condensed in the outdoor heat exchanger A1 and A2 flows through the liquid pipe connecting pipeline 134 into the indoor liquid pipe 13a and 13b of the room 210 and 220, flows to the indoor unit B and evaporates, flows to the indoor gas pipe 14a and 14b and collects at the low-pressure refrigerant header as the low-pressure valve 85a and 85b of the distributor C opens, and then flows to the second gas pipe connecting pipeline 131. The refrigerant flowing to the second gas pipe connecting pipeline 131 is introduced into the second compressor 54 via the second accumulator 55.

In this case, the refrigerant condensed in the outdoor heat exchanger A1 and A2 enters the dedicated outdoor air ventilation system D via the ventilation liquid pipe line 73 branched off from the liquid pipe connecting pipeline 134 and evaporates in the heat exchanger 20, and flows to the ventilation gas pipe line 74 and then to the common pipe 130. The refrigerant flowing to the common pipe 130 is introduced into the first compressor 53 via the first accumulator 52.

As such, the first compressor 53 performs refrigerant compression for removal of latent heat in the dedicated outdoor air ventilation system D, and the second compressor 54 performs refrigerant compression for removal of sensible heat in the indoor unit B, thereby allowing for controlling a plurality of different systems by means of a single outdoor unit A.

In this case, the pressure of the refrigerant flowing through the common pipe 130 may be higher than the pressure of the refrigerant flowing through the second gas pipe connecting pipeline 131, and the pressure of the refrigerant admitted into the second compressor 54 may be set lower than the pressure of the refrigerant admitted into the first compressor 53. Thus, the second compressor 54 may remove sensible heat in the indoor unit B1 and B2 by using an intermediate pressure, and the first compressor 53 may remove latent heat from outdoor air in the dedicated outdoor air ventilation system D by using a low-pressure refrigerant.

In such dual evaporating pressure control, each compressor's frequency is controlled according to the current humidity. Thus, cooling operation may be performed in such a way as to decrease the sensible heat ratio since the latent heat load is large if the indoor humidity is high or to increase the sensible heat ratio if the humidity is low. By controlling the compression capacities of the first compressor 53 and second compressor 54 according to the current humidity, it is possible to enhance the consumer's comfort and reduce the power consumption, thereby enabling high-efficiency operation.

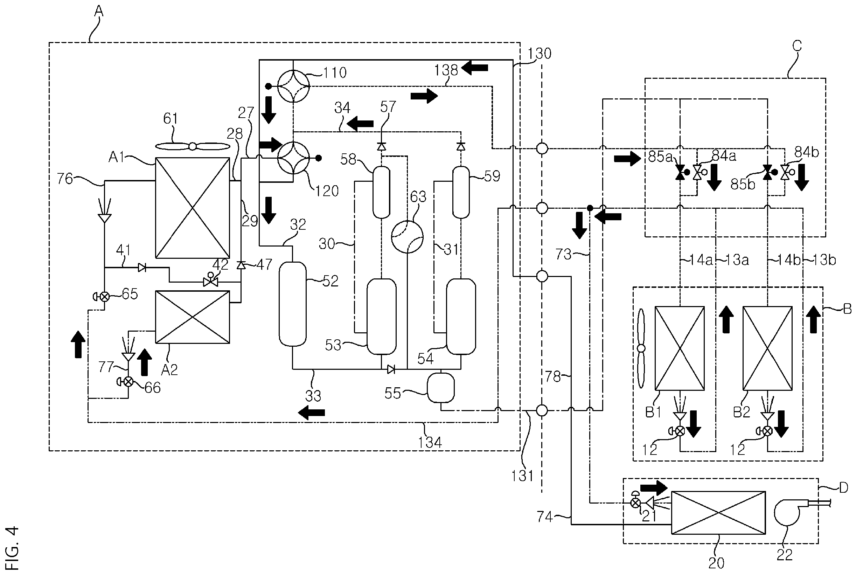

FIG. 4 is an operation diagram showing how the multi-air conditioner for cooling, heating, and ventilation of FIG. 1 works in heating and ventilation operation.

In heating and ventilation mode, a high-pressure, high-temperature refrigerant compressed in the compressor 53 and 54 is introduced into the indoor unit B1 and B2 and condensed.

Specifically, the second four-way valve 120 is set to On mode in which the refrigerant discharged from the compressor 53 and 54 does not pass through the second four-way valve 120. The first four-way valve 110 is set to Off mode in which the refrigerant discharged from the compressor 53 and 54 passes through the first four-way valve 110. The first four-way valve 110 connects the compressor 53 and 54 and the first gas pipe connecting pipeline 138.

The compressor valve 63 maintains Off mode and connects the first compressor 53 and the second compressor 54 in parallel.

Specifically, the second four-way valve 120 connects the outdoor heat exchanger-first four-way valve connecting pipeline 27 and the accumulator intake pipeline 32 so as to allow the refrigerant discharged from the outdoor heat exchanger A1 and A2 to flow to the first compressor 53 via the first accumulator 52. The first four-way valve 110 sends the refrigerant discharged from the compressor 53 and 54 to the first gas pipe connecting pipeline 138 connected to the indoor unit B. That is, the first four-way valve 110 connects the compressor discharge pipeline 34 and the first gas pipe connecting pipeline 138. Meanwhile, the accumulator intake pipeline 32 is branched off to the common pipe 130, and part of the refrigerant from the dedicated outdoor air ventilation system D flows to the accumulator intake pipeline 32 via the common pipe 130.

In heating mode, the liquid pipe valve, the gas pipe valve, and the common pipe valve open as well.

As for the flow of refrigerant in heating mode, the refrigerant discharged from the compressor 53 and 54 flows to the first gas pipe connecting pipeline 138 via the first four-way valve 110. As the high-pressure control valves 84a and 84b of the distributor C open, the refrigerant flowing through the first gas pipe connecting pipeline 138 flows to the indoor unit B and condenses there. The refrigerant condensed in the indoor unit B is introduced into the indoor liquid pipe 13 and the liquid header and then into the outdoor unit A via the liquid pipe connecting pipeline 134. The refrigerant introduced into the outdoor unit A flows to the outdoor heat exchanger A1 and A2 via the outdoor expansion valve 65 and 66. The refrigerant evaporated in the outdoor heat exchanger A1 and A2 flows to the second four-way valve 120 and then to the compressor 53 and 54 via the first accumulator 52.

In this case, the refrigerant condensed in the indoor unit B enters the dedicated outdoor air ventilation system D via the ventilation liquid pipe line 73 branched off from the liquid pipe connecting pipeline 134 and evaporates in the heat exchanger 20 to remove latent heat from outdoor air, and the evaporated refrigerant flows to the ventilation gas pipe line 74 and then to the common pipe 130. The refrigerant flowing to the common pipe 130 is introduced into the first and second compressors 53 and 54 via the first accumulator 52.

As such, in heating operation, a liquid refrigerant generated from the indoor unit B1 and B2 flows back to the dedicated outdoor air ventilation system D and is then compressed to remove latent heat from outdoor air, and the liquid refrigerant is admitted into the first and second compressors 53 and 54 by the first accumulator 52, thereby allowing for controlling a plurality of different systems by means of a single outdoor unit A.

In this case, no refrigerant flows to the second gas pipe connecting pipeline 131, and the second accumulator 55 does not operate and may work in the same manner as a typical outdoor unit A.

Meanwhile, an operation of controlling the latent heat ratio during heating operation by connecting the two compressors 53 and 54 in series will be described.

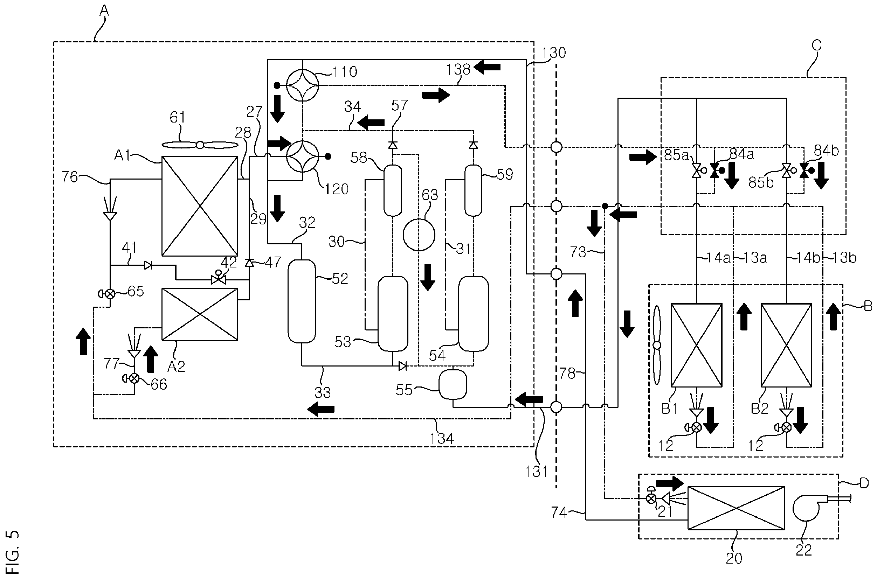

FIG. 5 is an operation diagram showing how the multi-air conditioner for cooling, heating, and ventilation of FIG. 1 works in general heating operation.

In heating and ventilation mode, a high-temperature, high-pressure refrigerant compressed in the compressor 53 and 54 enters the indoor unit B1 and B2 and condenses there.

Specifically, the second four-way valve 120 is set to On mode in which a refrigerant discharged from the compressor 53 and 54 does not pass through the second four-way valve 120. The first four-way valve 110 is set to Off mode in which the refrigerant discharged from the compressor 53 and 54 passes through the first four-way valve 100.

In this case, the compressor valve 63 maintains On mode and connects the outlet side of the first compressor 53 and the inlet side of the second compressor 54 in series.

Specifically, the second four-way valve 120 connects the outdoor heat exchanger-first four-way valve connecting pipeline 27 and the accumulator intake pipeline 32 so as to allow the refrigerant discharged from the outdoor heat exchanger A1 and A2 to flow to the first compressor 53 via the first accumulator 52. The first four-way valve 110 sends the refrigerant discharged from the compressor 53 and 54 to the first gas pipe connecting pipeline 138 connected to the indoor unit B. That is, the first four-way valve 110 connects the compressor discharge pipeline 34 and the first gas pipe connecting pipeline 138. Meanwhile, the accumulator intake pipeline 32 is branched off to the common pipe 130, and part of the refrigerant from the dedicated outdoor air ventilation system D flows to the accumulator intake pipeline 32 via the common pipe 130.

In heating mode, the liquid pipe valve, the gas pipe valve, and the common pipe valve open as well.

As for the flow of refrigerant in heating mode, the refrigerant discharged from the compressor 53 and 54 flows to the first gas pipe connecting pipeline 138 via the first four-way valve 110. As the high-pressure control valves 84a and 84b of the distributor C open, the refrigerant flowing through the first gas pipe connecting pipeline 138 flows to the indoor unit B and condenses there. The refrigerant condensed in the indoor unit B is introduced into the indoor liquid pipe 13 and the liquid header and then into the outdoor unit A via the liquid pipe connecting pipeline 134. The refrigerant introduced into the outdoor unit A flows to the outdoor heat exchanger A1 and A2 via the outdoor expansion valve 65 and 66. The refrigerant evaporated in the outdoor heat exchanger A1 and A2 flows to the second four-way valve 120 and then to the compressor 53 and 54 via the first accumulator 52. The refrigerant compressed firstly in the first compressor 53 flows from the outlet side of the first compressor 53 to the inlet side of the second compressor 54 through the compressor valve 63, and is compressed secondly in the second compressor 54.

Accordingly, the low pressure of the refrigerant discharged through the second compressor 54 may be further lowered, and the heating efficiency of the indoor unit B1 and B2 is therefore improved. Also, the liquid refrigerant generated from the indoor unit B1 and B2 flows back to the dedicated outdoor air ventilation system D and is then compressed to remove latent heat from outdoor air.

In this case, the refrigerant condensed in the indoor unit B enters the dedicated outdoor air ventilation system D via the ventilation liquid pipe line 73 branched off from the liquid pipe connecting pipeline 134 and evaporates in the heat exchanger 20 to remove latent heat from outdoor air, and the evaporated refrigerant flows to the ventilation gas pipe line 74 and then to the common pipe 130. The refrigerant flowing to the common pipe 130 is introduced into the first compressor 53 via the first accumulator 52.

As such, in heating operation, a liquid refrigerant generated from the indoor unit B flows back to the dedicated outdoor air ventilation system D and is then compressed to remove latent heat from outdoor air, and the first compressor 53 and the second compressor 54 are connected in series to perform compression in two stages, thereby further increasing the compression ratio.

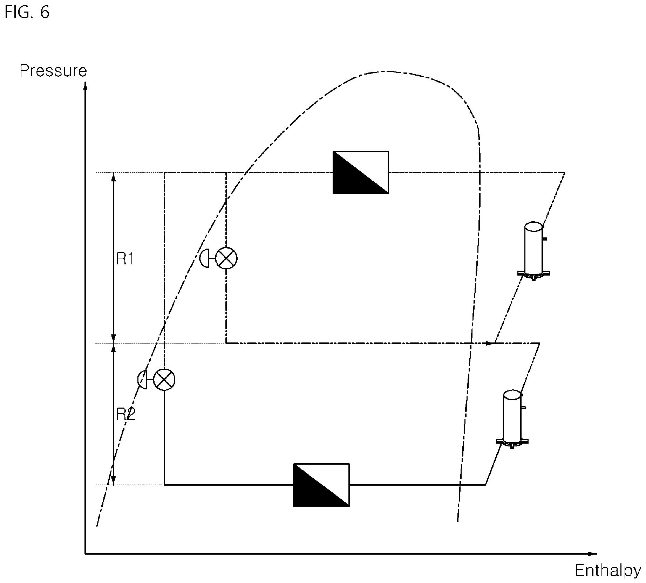

FIG. 6 is a graph showing an enthalpy change caused by an increase in compression ratio according to the present disclosure.

As shown in FIG. 6, when the compression ratio goes up from R1 to R2, the condensation temperature increases and the evaporation temperature decreases.

Accordingly, a refrigerant with a lower evaporation temperature for handling latent heat may be formed, which may improve dehumidification efficiency when a liquid refrigerant is provided to the dedicated outdoor air ventilation system D.

In this case, no refrigerant flows to the second gas pipe connecting pipeline 131, and the second accumulator 55 does not operate.

Meanwhile, in a simultaneous-type system for cooling, heating, and ventilation according to another embodiment of the present disclosure, each indoor unit is operable in different modes.

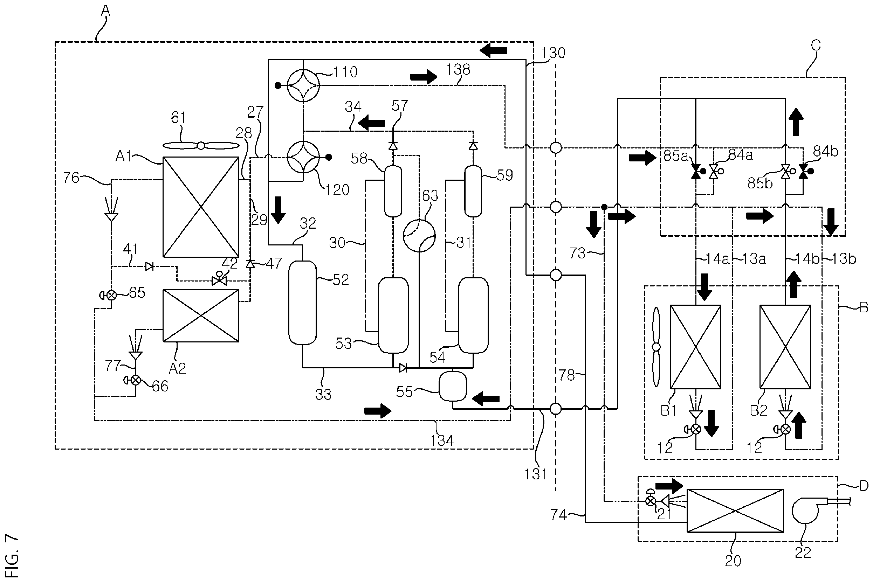

FIG. 7 is an operation diagram showing how the multi-air conditioner for cooling, heating, and ventilation of FIG. 1 works during simultaneous operation of cooling, heating, and ventilation according to another embodiment of the present disclosure.

As shown in FIG. 7, when heating is performed in the first indoor unit and cooling is performed in the second indoor unit, the high-temperature, high-pressure refrigerant compressed in the compressor 53 and 54 is further condensed as it flows through the outdoor heat exchanger A1 and A2.

The first four-way valve 110 is set to Off mode in which the refrigerant discharged from the compressor 53 and 54 does not pass through the first four-way valve 110. The second four-way valve 120 is set to On mode in which the refrigerant discharged from the compressor 53 and 54 passes through the second four-way valve 120. That is, the second four-way valve 120 connects the compressor discharge pipeline 34 and the outdoor heat exchanger-first four-way valve connecting pipeline 27, and the first four-way valve 110 connects the compressor discharge pipeline 34 and the first gas pipe connecting pipeline 138.

Meanwhile, the accumulator intake pipeline 32 is branched off to the common pipe 130, and part of the refrigerant flows to the accumulator intake pipeline 32 via the common pipe 130.

In simultaneous cooling and heating mode, the liquid pipe valve, the gas pipe valve, and the common pipe valve open as well.

Moreover, the compressor valve 63 operates in Off mode so that the outlet side of the first compressor 53 and the inlet side of the second compressor 54 are connected not in series but in parallel.

As for the flow of refrigerant, the refrigerant discharged from the compressor 53 and 54 flows to the outdoor heat exchanger A2 via the second four-way valve 120. The refrigerant condensed in the outdoor heat exchanger A1 and A2 flows through the liquid pipe connecting pipeline 134 into the indoor liquid pipe 13b of the second room 220, flows to the second indoor unit B2 and evaporates, flows to the indoor gas pipe 14b and collects at the low-pressure refrigerant header as the low-pressure valve 85b of the distributor C opens, and then flows to the second gas pipe connecting pipeline 131. The refrigerant flowing to the second gas pipe connecting pipeline 131 is introduced into the second compressor 54 via the second accumulator 55.

Meanwhile, part of the refrigerant discharged from the compressor 53 and 54 flows to the first gas pipe connecting pipeline 138 via the first four-way valve 110. As the high-pressure control valve 84a of the distributor C opens, the refrigerant flowing to the first gas pipe connecting pipeline 138 flows to the first indoor unit B1 and condenses there. The refrigerant condensed in the first indoor unit B1 is introduced into the indoor liquid pipe 13a and the liquid header and then into the outdoor unit A via the liquid pipe connecting pipeline 134.

In this case, the refrigerant condensed in the outdoor heat exchanger A1 and A2 enters the dedicated outdoor air ventilation system D via the ventilation liquid pipe line 73 branched off from the liquid pipe connecting pipeline 134 and evaporates in the heat exchanger 20, and flows to the ventilation gas pipe line 74 and then to the common pipe 130. The refrigerant flowing to the common pipe 130 is introduced into the first compressor 53 via the first accumulator 52.

As such, the first compressor 53 performs refrigerant compression for removal of latent heat in the dedicated outdoor air ventilation system D, and the second compressor 54 performs refrigerant compression for removal of sensible heat in the second indoor unit B2, thereby allowing for controlling a plurality of different systems by means of a single outdoor unit A.

In this case, the pressure of the refrigerant flowing through the common pipe 130 may be higher than the pressure of the refrigerant flowing through the second gas pipe connecting pipeline 131.

By performing outdoor air dehumidification for ventilation while simultaneously performing cooling and heating depending on the operation mode of each indoor unit B1 and B2, the mode of each application may be satisfied by means of a single outdoor unit A, thereby reducing facility costs.

In such dual evaporating pressure control, each compressor's frequency is controlled according to the current humidity. Thus, cooling operation may be performed in such a way as to decrease the sensible heat ratio since the latent heat load is large if the indoor humidity is high or to increase the sensible heat ratio if the humidity is low. By controlling the compression capacities of the first compressor 53 and second compressor 54 according to the current humidity, it is possible to enhance the consumer's comfort and reduce the power consumption, thereby enabling high-efficiency operation.

## Claims

1. A multi-air conditioner for cooling and heating, the multi-air conditioner comprising:
at least one indoor unit (B) installed in a room, that comprises an indoor heat exchanger (B1, B2) and an indoor expansion valve (12);
an outdoor unit (A) connected to the indoor unit (B) via a refrigerant pipeline (130, 134, 138), that comprises an outdoor heat exchanger (A1, A2), a plurality of compressors (53, 54), an outdoor expansion valve (65, 66), and a four-way valve (110, 120); and
a dedicated outdoor air ventilation unit (C) connected to the indoor unit (B) and the outdoor unit (A) via the refrigerant pipeline (130, 134, 138), that is configured to dehumidify and ventilate outdoor air and supply the outdoor air to the room,
wherein the outdoor unit (A) comprises:
a first compressor (53);
a second compressor (54); a compressor valve (63) configured to connect the second compressor (64) both in series and parallel to the first compressor (53); whereby the compressor valve (63) is connected between the outlet side of the first compressor (53) and an inlet side of the second compressor (54), and is configured to connect or disconnect the first compressor (53) and the second compressor (54),
wherein the outdoor unit (A) is configured to provide a refrigerant to both the dedicated outdoor air ventilation unit (C) and the indoor unit (B), whereby the compressor valve (63) is configured to control the compression capacity depending on an operation mode of the dedicated outdoor air ventilation unit (C) and the indoor unit (B).

2. The multi-air conditioner of claim 1, wherein the compressor valve (63) is configured to connect or disconnect the outlet side of the first compressor (53) and the inlet side of the second compressor (54).

3. The multi-air conditioner of claim 2, wherein, when the compressor valve (63) is in On mode, the compression ratio of the compressors (53, 54) in the outdoor unit (A) goes up.

4. The multi-air conditioner of any one of claims 1 to 3, wherein the refrigerant pipeline (130, 134, 138) comprises:
a liquid pipe connecting pipeline (134) through which a high-pressure liquid refrigerant flows;
a first gas pipe connecting pipeline (138) through which a high-pressure gaseous refrigerant flows; and
a second gas pipe connecting pipeline (131) through which a low-pressure gaseous refrigerant flows.

5. The multi-air conditioner of claim 4, wherein the second gas pipe connecting pipeline (131) is connected to the inlet side of the second compressor (54).

6. The multi-air conditioner of claim 4 or 5, wherein the refrigerant pipeline (130, 134, 138) further comprises a common pipe (130) that is configured to cause a refrigerant to flow from the dedicated outdoor air ventilation system (D) to an inlet side of the first compressor (53).

7. The multi-air conditioner of claim 6, wherein the liquid pipe connecting pipeline (134) further comprises a ventilation liquid pipe line (73) branched off to the dedicated outdoor air ventilation unit (C) to allow a liquid refrigerant to flow to the dedicated outdoor air ventilation unit (C).

8. The multi-air conditioner of any one of claims 1 to 7, wherein, in a cooling operation of the indoor unit (B), the multi-air conditioner is configured such that a gaseous refrigerant is provided from the indoor unit (B) to the second compressor (54) via the second gas pipe connecting pipeline (131), and the gaseous refrigerant is provided from the dedicated outdoor air ventilation unit (C) to the first compressor (53) via the common pipe (130).

9. The multi-air conditioner of any one of claims 1 to 8, wherein the pressure of the gaseous refrigerant provided to the first compressor (53) is higher than the pressure of the gaseous refrigerant provided to the second compressor (54).

10. The multi-air conditioner of any one of claims 1 to 9, wherein, in a heating operation of the indoor unit (B), the multi-air conditioner is configured such that a liquid refrigerant is provided from the indoor unit (B) to the dedicated outdoor air ventilation unit (C) via the ventilation liquid pipe line (73).

11. The multi-air conditioner of claim 9, wherein, in the heating operation of the indoor unit (B), the first and second compressors (53, 54) are configured to compress the gaseous refrigerant from the dedicated outdoor air ventilation unit (C) and provide the same to the indoor unit (B) via the first gas pipe connecting pipeline (138).

12. The multi-air conditioner of claim 11, wherein, in the heating operation of the indoor unit (B), the first compressor (53) and the second compressor (54) are connected in series to compress the gaseous refrigerant from the dedicated outdoor air ventilation unit (C) and provide the same to the indoor unit (B) via the first gas pipe connecting pipeline (138).

13. The multi-air conditioner of any one of claims 1 to 12, wherein the compression ratio of the first compressor (53) and the second compressor (54) varies with indoor humidity.

14. The multi-air conditioner of any one of claims 1 to 13, wherein the multi-air conditioner for cooling and heating further comprises a distributor for distributing a refrigerant to the plurality of indoor units (B),
wherein the distributor comprises:
a low-pressure valve (85a, 85b) that is configured to allow a low-pressure gaseous refrigerant to flow to a gas pipeline connected to the indoor unit (B); and
a high-pressure valve (84a, 84b) that is configured to allow a high-pressure gaseous refrigerant to flow to a gas pipeline connected to the indoor unit (B).

## Patentansprüche

1. Mehrfach-Klimaanlage zum Kühlen und Heizen, wobei die Mehrfach-Klimaanlage umfasst:
zumindest eine in einem Raum installierte Inneneinheit (B), die einen Innenwärmetauscher (B1, B2) und ein Innenexpansionsventil (12) umfasst;
eine Außeneinheit (A), die über eine Kältemittelleitung (130, 134, 138) mit der Inneneinheit (B) verbunden ist und einen Außenwärmetauscher (A1, A2), mehrere Kompressoren (53, 54), ein Außenexpansionsventil (65, 66) und ein Vierwegeventil (110, 120) umfasst; und
eine zugehörige Außenluft-Ventilationseinheit (C), die über die Kältemittelleitung (130, 134, 138) mit der Inneneinheit (B) und der Außeneinheit (A) verbunden und dazu ausgelegt ist, Außenluft zu entfeuchten und umzuwälzen und die Außenluft dem Raum zuzuführen,
wobei die Außeneinheit (A) umfasst:
einen ersten Kompressor (53);
einen zweiten Kompressor (54);
ein Kompressorventil (63) zum Verbinden des zweiten Kompressors (54) sowohl in Reihe als auch parallel mit dem ersten Kompressor (53); wobei das Kompressorventil (63) zwischen der Auslassseite des ersten Kompressors (53) und einer Einlassseite des zweiten Kompressors (54) angeschlossen und dazu ausgelegt ist, den ersten Kompressor (53) und den zweiten Kompressor (54) zu verbinden bzw. zu trennen,
wobei die Außeneinheit (A) dazu ausgelegt ist, ein Kältemittel sowohl für die zugehörige Außenluft-Ventilationseinheit (C) als auch für die Inneneinheit (B) bereitzustellen, wobei das Kompressorventil (63) dazu ausgelegt ist, die Kompressionskapazität in Abhängigkeit von einem Betriebsmodus der zugehörigen Außenluft-Ventilationseinheit (C) und der Inneneinheit (B) zu steuern.

2. Mehrfach-Klimaanlage nach Anspruch 1, wobei das Kompressorventil (63) dazu ausgelegt ist, die Auslassseite des ersten Kompressors (53) und die Einlassseite des zweiten Kompressors (54) zu verbinden bzw. zu trennen.

3. Mehrfach-Klimaanlage nach Anspruch 2, wobei dann, wenn das Kompressorventil (63) im Ein-Modus ist, die Kompressionsrate der Kompressoren (53, 54) in der Außeneinheit (A) ansteigt.

4. Mehrfach-Klimaanlage nach einem der Ansprüche 1 bis 3, wobei die Kältemittelleitung (130, 134, 138) umfasst:
eine Flüssigkeitsrohrverbindungsleitung (134), durch die ein flüssiges Hochdruckkältemittel strömt;
eine erste Gasrohrverbindungsleitung (138), durch die ein gasförmiges Hochdruckkältemittel strömt; und
eine zweite Gasrohrverbindungsleitung (131), durch die ein gasförmiges Niederdruckkältemittel strömt.

5. Mehrfach-Klimaanlage nach Anspruch 4, wobei die zweite Gasrohrverbindungsleitung (131) mit der Einlassseite des zweiten Kompressors (54) verbunden ist.

6. Mehrfach-Klimaanlage nach Anspruch 4 oder 5, wobei die Kältemittelleitung (130, 134, 138) ferner eine gemeinsame Leitung (130) umfasst, die dazu ausgelegt ist, zu bewirken, dass ein Kältemittel von dem zugehörigen Außenluft-Ventilationssystem (D) zu einer Einlassseite des ersten Kompressors (53) strömt.

7. Mehrfach-Klimaanlage nach Anspruch 6, wobei die Flüssigkeitsrohrverbindungsleitung (134) ferner eine Ventilationsflüssigkeitsrohrleitung (73) umfasst, die zu der zugehörigen Außenluft-Ventilationseinheit (C) abzweigt, damit ein flüssiges Kältemittel zu der zugehörigen Außenluft-Ventilationseinheit (C) strömen kann.

8. Mehrfach-Klimaanlage nach einem der Ansprüche 1 bis 7, wobei die Mehrfach-Klimaanlage so ausgelegt ist, dass bei einem Kühlbetrieb der Inneneinheit (B) ein gasförmiges Kältemittel von der Inneneinheit (B) über die zweite Gasrohrverbindungsleitung (131) zum zweiten Kompressor (54) geleitet wird und das gasförmige Kältemittel von der zugehörigen Außenluft-Ventilationseinheit (C) über die gemeinsame Leitung (130) zum ersten Kompressor (53) geleitet wird.

9. Mehrfach-Klimaanlage nach einem der Ansprüche 1 bis 8, wobei der Druck des dem ersten Kompressor (53) zugeführten gasförmigen Kältemittels höher ist als der Druck des dem zweiten Kompressor (54) zugeführten gasförmigen Kältemittels.

10. Mehrfach-Klimaanlage nach einem der Ansprüche 1 bis 9, wobei die Mehrfach-Klimaanlage so ausgelegt ist, dass bei einem Heizbetrieb der Inneneinheit (B) ein flüssiges Kältemittel von der Inneneinheit (B) über die Ventilationsflüssigkeitsleitung (73) zur zugehörigen Außenluft-Ventilationseinheit (C) geleitet wird.

11. Mehrfach-Klimaanlage nach Anspruch 9, wobei der erste und der zweite Kompressor (53, 54) dazu ausgelegt sind, bei Heizbetrieb der Inneneinheit (B) das gasförmige Kältemittel von der zugehörigen Außenluft-Ventilationseinheit (C) zu komprimieren und dasselbe über die erste Gasrohrverbindungsleitung (138) der Inneneinheit (B) zuzuführen.

12. Mehrfach-Klimaanlage nach Anspruch 11, wobei bei Heizbetrieb der Inneneinheit (B) der erste Kompressor (53) und der zweite Kompressor (54) in Reihe geschaltet sind, um das gasförmige Kältemittel von der zugehörigen Außenluft-Ventilationseinheit (C) zu komprimieren und dasselbe über die erste Gasrohrverbindungsleitung (138) der Inneneinheit (B) zuzuführen.

13. Mehrfach-Klimaanlage nach einem der Ansprüche 1 bis 12, wobei die Kompressionsrate des ersten Kompressors (53) und des zweiten Kompressors (54) mit der Innenraumfeuchtigkeit variiert.

14. Mehrfach-Klimaanlage nach einem der Ansprüche 1 bis 13, wobei die Mehrfach-Klimaanlage zum Kühlen und Heizen ferner einen Verteiler zum Verteilen eines Kältemittels an die Vielzahl von Inneneinheiten (B) umfasst,
wobei der Verteiler umfasst:
ein Niederdruckventil (85a, 85b), das so ausgelegt ist, dass ein gasförmiges Niederdruckkältemittel zu einer mit der Inneneinheit (B) verbundenen Gasleitung strömen kann; und
ein Hochdruckventil (84a, 84b), das so ausgelegt ist, dass ein gasförmiges Hochdruckkältemittel zu einer Gasleitung strömen kann, die mit der Inneneinheit (B) verbunden ist.

## Revendications

1. Climatiseur à unités multiples pour le refroidissement et le chauffage, le climatiseur à unités multiples comprenant :
au moins une unité intérieure (B) installée dans une pièce, qui comprend un échangeur de chaleur intérieur (B1, B2) et une soupape de détente intérieure (12) ;
une unité extérieure (A) connectée à l'unité intérieure (B) par l'intermédiaire d'une conduite de réfrigérant (130, 134, 138), qui comprend un échangeur de chaleur extérieur (A1, A2), une pluralité de compresseurs (53, 54), une soupape de détente extérieure (65, 66) et une soupape à quatre voies (110, 120) ; et
une unité dédiée de ventilation d'air extérieur (C) connectée à l'unité intérieure (B) et à l'unité extérieure (A) par l'intermédiaire de la conduite de réfrigérant (130, 134, 138), qui est configurée pour déshumidifier et ventiler l'air extérieur et pour fournir l'air extérieur à la pièce,
dans lequel l'unité extérieure (A) comprend :
un premier compresseur (53) ;
un deuxième compresseur (54) ; une soupape de compresseur (63) configurée pour connecter le deuxième compresseur (64) à la fois en série et en parallèle au premier compresseur (53) ; où la soupape de compresseur (63) est connectée entre le côté de sortie du premier compresseur (53) et un côté d'entrée du deuxième compresseur (54) et est configurée pour connecter ou déconnecter le premier compresseur (53) et le deuxième compresseur (54),
dans lequel l'unité extérieure (A) est configurée pour fournir du réfrigérant à la fois à l'unité dédiée de ventilation d'air extérieur (C) et à l'unité intérieure (B), où la soupape de compresseur (63) est configurée pour commander la capacité de compression en fonction d'un mode de fonctionnement de l'unité dédiée de ventilation d'air extérieur (C) et de l'unité intérieure (B).

2. Climatiseur à unités multiples selon la revendication 1, dans lequel la soupape de compresseur (63) est configurée pour connecter ou déconnecter le côté de sortie du premier compresseur (53) et le côté d'entrée du deuxième compresseur (54).

3. Climatiseur à unités multiples selon la revendication 2, dans lequel, lorsque la soupape de compresseur (63) est en mode Marche, le taux de compression des compresseurs (53, 54) dans l'unité extérieure (A) augmente.

4. Climatiseur à unités multiples selon l'une quelconque des revendications 1 à 3, dans lequel la conduite de réfrigérant (130, 134, 138) comprend :
une conduite de connexion de tuyau de liquide (134), à travers laquelle circule un réfrigérant liquide à haute pression ;
une première conduite de connexion de tuyau de gaz (138), à travers laquelle circule un réfrigérant gazeux à haute pression ; et
une deuxième conduite de connexion de tuyau de gaz (131), à travers laquelle circule un réfrigérant gazeux à basse pression.

5. Climatiseur à unités multiples selon la revendication 4, dans lequel la deuxième conduite de connexion de tuyau de gaz (131) est connectée au côté d'entrée du deuxième compresseur (54).

6. Climatiseur à unités multiples selon la revendication 4 ou 5, dans lequel la conduite de réfrigérant (130, 134, 138) comprend en outre un tuyau commun (130), qui est configuré pour amener un réfrigérant à s'écouler depuis le système dédié de ventilation d'air extérieur (D) vers un côté d'entrée du premier compresseur (53).

7. Climatiseur à unités multiples selon la revendication 6, dans lequel la conduite de connexion de tuyau de liquide (134) comprend en outre une conduite de liquide de ventilation (73) dérivée vers l'unité dédiée de ventilation d'air extérieur (C) pour permettre à un réfrigérant liquide de s'écouler vers l'unité dédiée de ventilation d'air extérieur (C).

8. Climatiseur à unités multiples selon l'une quelconque des revendications 1 à 7, dans lequel, dans un mode de refroidissement de l'unité intérieure (B), le climatiseur à unités multiples est configuré de telle sorte qu'un réfrigérant gazeux est fourni de l'unité intérieure (B) au deuxième compresseur (54) par l'intermédiaire de la deuxième conduite de connexion de tuyau de gaz (131), et le réfrigérant gazeux est fourni de l'unité dédiée de ventilation d'air extérieur (C) au premier compresseur (53) par l'intermédiaire du tuyau commun (130).

9. Climatiseur à unités multiples selon l'une quelconque des revendications 1 à 8, dans lequel la pression du réfrigérant gazeux fourni au premier compresseur (53) est supérieure à la pression du réfrigérant gazeux fourni au deuxième compresseur (54).

10. Climatiseur à unités multiples selon l'une quelconque des revendications 1 à 9, dans lequel, dans un mode de chauffage de l'unité intérieure (B), le climatiseur à unités multiples est configuré de telle sorte qu'un réfrigérant liquide est fourni de l'unité intérieure (B) à l'unité dédiée de ventilation d'air extérieur (C) par l'intermédiaire de la conduite de liquide de ventilation (73).

11. Climatiseur à unités multiples selon la revendication 9, dans lequel, dans l'opération de chauffage de l'unité intérieure (B), les premier et deuxième compresseurs (53, 54) sont configurés pour comprimer le réfrigérant gazeux provenant de l'unité dédiée de ventilation d'air extérieur (C) et pour le fournir à l'unité intérieure (B) par l'intermédiaire de la première conduite de connexion de tuyau de gaz (138).

12. Climatiseur à unités multiples selon la revendication 11, dans lequel, dans le mode de chauffage de l'unité intérieure (B), le premier compresseur (53) et le deuxième compresseur (54) sont connectés en série pour comprimer le réfrigérant gazeux provenant de l'unité dédiée de ventilation d'air extérieur (C) et pour le fournir à l'unité intérieure (B) par l'intermédiaire de la première conduite de connexion de tuyau de gaz (138).

13. Climatiseur à unités multiples selon l'une quelconque des revendications 1 à 12, dans lequel le taux de compression du premier compresseur (53) et du deuxième compresseur (54) varie avec l'humidité intérieure.

14. Climatiseur à unités multiples selon l'une quelconque des revendications 1 à 13, dans lequel le climatiseur à unités multiples pour le refroidissement et le chauffage comprend en outre un distributeur pour distribuer un réfrigérant à la pluralité d'unités intérieures (B),
dans lequel le distributeur comprend :
une soupape à basse pression (85a, 85b), qui est configurée pour permettre à un réfrigérant gazeux à basse pression de s'écouler vers une conduite de gaz connectée à l'unité intérieure (B) ; et
une soupape à haute pression (84a, 84b), qui est configurée pour permettre à un réfrigérant gazeux à haute pression de s'écouler vers une conduite de gaz connectée à l'unité intérieure (B).
